# EUROPEAN PATENT APPLICATION

(11) **EP 1 460 879 A2**
(43) Date of publication of application: **22.09.2004**
(21) Application number: 04006045.1
(22) Date of filing: 15.03.2004
(51) Int. Cl.: H04R 5/02, B60R 11/02

(54) **Individual sound system for vehicles**

(30) Priority: 18.03.2003 IT RE20030028
(71) Applicant: ASK INDUSTRIES S.p.A., 42100 Reggio Emilia (IT)
(72) Inventor: Arletti, Maurizio, 42100 Reggio Emilia (IT); Farina, Angelo, 42100 Reggio Emilia (IT); Nili, Tiziano, 42100 Reggio Emilia (IT); Ugolotti, Emanuele, 42100 Reggio Emilia (IT)
(74) Representative: Lecce, Giovanni

(57) **Abstract**

An individual sound system for vehicles comprising modules or pre-assembled boxes (1), containing the loudspeakers (3,3'), associated to the seats (7). Each box is integrated under the roof (5) of the vehicles and it is comprised into the roof upholstery (4), it is vertically downwards oriented compared to a correspondent underlying seat (7) in order to be in substantial vertical alignment with the occupier's head position. The boxes (I) have a "dipole stereo" configuration and constitute a sort of individual "virtual headset" for each passenger.

## Description

The present invention refers to an individual sound system for vehicles. More particularly, the present invention refers to a sound system for each passenger of a vehicle.

It is known that the most of the present sound systems for passenger compartments of vehicles contemplate the use of electro-acoustic transducers (loud-speakers) that are usually placed into the doors.

It is also known that the above said solution obliges the car manufacturers to some structural constraints concerning both the minimum volumes required for a good sound emission and the requirement of an appropriate watertight of the same transducers and of the doors in their whole. In order to reach acceptable sound levels that can be enjoyed by the users, these applications require the use of efficient electroacoustic transducers. Usually, the installed electroacoustic transducers have features comprised in the range of 88 - 90 dB SPL (Sound Pressure Level), 1W power, the microphone is placed at 1 m distance in anechoic chamber and on a DIN standard panel. In order to obtain these qualities, the transducers must be provided with bulky and heavy magnets and with great membranes (preferably having a diameter of 165 mm). Anyway a considerable power is required as the listening levels into the passenger compartments of vehicles in motion can be about 98-102 dB SPL.

This implies that the loud-speakers almost always work at the limit of the power they hold (usually 20 W), in a condition causing a considerable loss of heat on the source (car radio set) and with the emission of distorted acoustic signals compared to the original ones.

Another drawback consists in that the emission of the acoustic signals of the present car radio sets takes place, more or less, with the same sound intensity in the whole passenger compartment; this condition is not always appreciated by all passengers.

Object of the present invention is to remove the above-mentioned drawbacks.

According to the present invention, this and other objects resulting from the following description are obtained by an individual sound system for vehicles comprising at least one preassembled modular box containing two loud-speakers, installed under the roof of vehicles and being vertically downwards oriented compared to a correspondent underlying seat, being substantially aligned with the position of the passenger's head occupying the seat; said loud-speakers of said at least one modular box having a "dipole stereo" configuration and being placed at an "average interaural" distance (D) among them, with the useful sound emissions oriented towards the ears of the passengers occupying the underlying seats, like an individual "virtual headset" for each occupier.

By the individual sound system for vehicles of the present invention, the following results are obtained:
the loud-speakers installed in the car doors are replaced by the ones comprised and preassembled into dedicated modular boxes, with a closed air volume being appropriately proportioned for the optimization of the loud-speakers efficiency at low frequencies;
the boxes are placed under the roof of vehicles in the roof upholstery, one for each underlying seat (or only for the defined seats);
the loud-speakers of each ceiling box, are coupled among them at an "average interaural" distance and are downwards oriented with a vertical layout compared to the correspondent underlying seat, in substantial alignment with the position of the occupier's head.

The advantages obtained by the sound system of the present invention essentially consist in the fact that the loud-speakers are closer to each listener. This layout implies that:
a) the loud-speakers can be less powerful and have a higher impedance as the source must supply less power thus dissipating less heat;
b) for the same power, the loud-speakers can be far less efficient, i.e. they can be lighter, less bulky and less expensive;
c) the loud-speakers are not in free air, but they are installed into appropriate modular boxes, that are properly proportionate and have a "dipole stereo" configuration, in such a way to constitute a sort of "virtual headset" for the seated listener;
d) the useful sound emissions of the loud-speakers of each modular box are directed only towards the passengers' ears occupying the associated seats, without disturbing the occupiers of the other seats who are not provided with the modules or who are not interested into the listening.

The manufacturing and functional features of the individual sound system for vehicles of the present invention can be better understood from the detailed description which follows wherein reference is made to the figures of the enclosed drawings representing one of its embodiments which is given only by way of non-limitative example wherein:

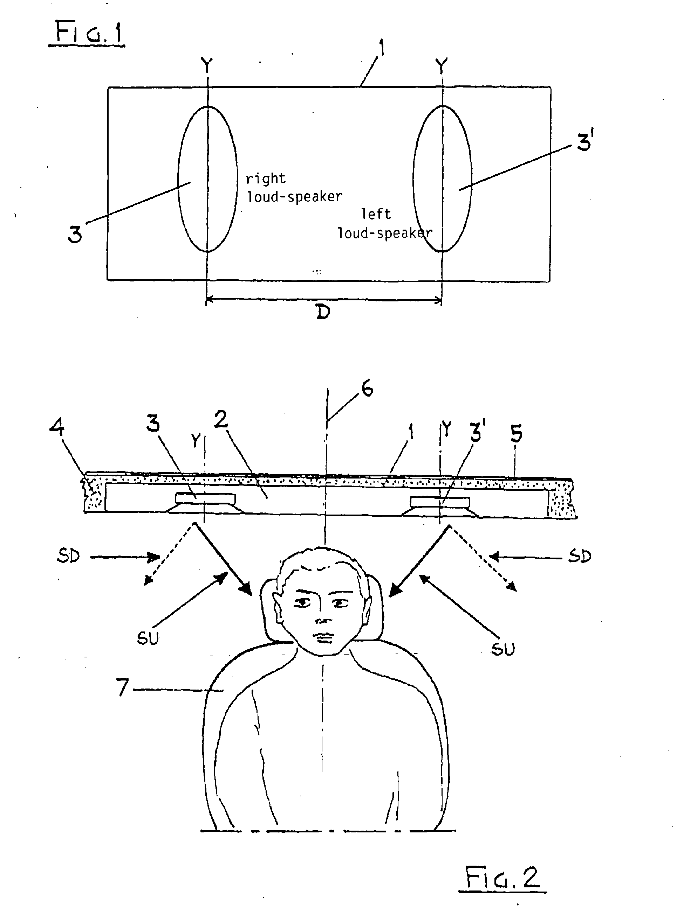

Figure 1 is a schematic plan view, from bottom to top of a modular box of the sound system of the present invention;
Figure 2 is a schematic front view of the section of a modular box with loud-speakers installed under the roof of a vehicle inside the upholstery of the roof aligned with an underlying seat occupied by a passenger;
Figure 3 is an example of a Hi-Fi version standard layout, with amplifier and DSP (Digital Signal Processor), for the roof installation of the modular boxes of the sound system of the present invention;
Figure 4 is an example of standard layout without dedicated amplifier for the roof installation of the modular boxes of the sound system of the present invention;

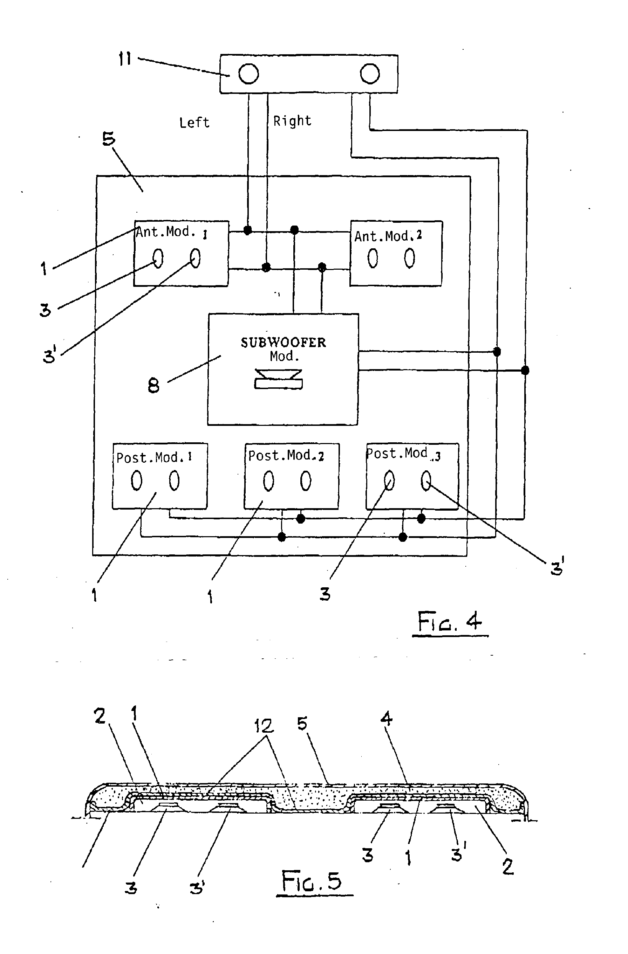

Figure 5 is a schematic view of a transversal section of a vehicle roof with the modular boxes embedded and preinstalled into box impressions obtained on one shell to be applied under the roof of the vehicles inside the roof upholstery;
Figure 6 is an example of layout for an individual and directional sound wherein the loud-speakers are connected in such a way to receive the signals in the push-pull mode, and
Figure 7 shows the cross-over frequency diagram of the solution wherein the loud-speakers are connected in such a way to receive the signals in the push-pull mode according to the layout of Figure 6.

With reference to the Figures, the individual sound system of the present invention comprises at least one modular box 1 containing a rear air volume 2 which is dedicated and properly proportioned for the optimization of the efficiency at low frequencies of two loud-speakers 3 and 3' that are installed into said modular box 1. The loud-speakers are preferably of the broad band known type with digital processors of signals conceived in order to comprise the associated tweeter and woofer functions and are installed into the box 1 at a distance D corresponding to their directivity. More particularly, the distance D between the parallel symmetry axes Y-Y of the loud-speakers 3, 3' is quantified as the one that is very close to the average "interaural distance" whose value is statistically expressed around 20÷25 cm. In order to be highly directive, it is contemplated that the loud-speakers 3, 3' have very narrow directivity lobes, that are, for example, preferably but not exclusively comprised between 10÷15°. The loud-speakers are installed into said boxes 1 with a "dipole stereo" configuration thus connecting with the car radio set in the Hi-Fi version with amplifier and DSP.

Each modular box 1 complete with loud-speakers 3, 3'and the relevant connections is placed inside the upholstery of the roof 4 to be installed under the roof 5 of vehicles, with the same loud-speakers downwards oriented and symmetrically and orthogonally aligned compared to the vertical symmetry plan 6 of each seat 7, substantially aligned with the position of the occupier's head.

In this way, the "SU" useful acoustic signals emitted by the loud-speakers are only oriented towards the ears of the passengers occupying each single seat, while the "SD" signals are dispersed and are not received.

In said configurations, the loud-speakers 3, 3' to be used can have a lower efficiency than the one obtained by the present sound systems. In fact, considering that, the SPL of a traditional loud-speaker approximately doubles when the listening distance is cut by half, and if at 1 m 90 dB with 1 W power are detected, at ½ m about 96 dB with 1 W are detected and at ¼ m about 102 dB with 1 W power are detected, it can be noticed that in order to reach the SPL level of 98-102 dB with a traditional loud-speaker used in the system of the present invention, 1 W of power would be enough instead of 20 W like the ones required for the present applications. This is due to the fact that the distance between the loud-speakers 3, 3' and the ears of the passengers occupying the underlying seats 7 is of 25-30 cm, that substantially corresponds to the "average interaural" distance, excluding the tallness differences of users that are negligible. In conclusion, the loud-speakers 3, 3' that can be installed into the sound system of the present invention, compared with the ones installed into the known systems can have a lower efficiency, they can be less powerful with a higher impedance and consequently dissipate less heat, they can be lighter, less bulky and, consequently, less expensive. Moreover, the boxes according to the sound system of the present invention are perfectly modular, they are dedicated for each seat and allow an absolute acoustic independence among the same seats, independently from the fact that they are equipped with the same boxes or not. This means that the modular boxes can be installed on vehicles according to a required number and layout compared to the number of seats. For example: the installation of one or two modular boxes 1 only in correspondence with the front seat or seats; the installation of four modular boxes 1 in correspondence with the two front seats and of the two rear ones; the installation of five modular boxes 1 in correspondence with the two front seats and of the three rear ones and so on.

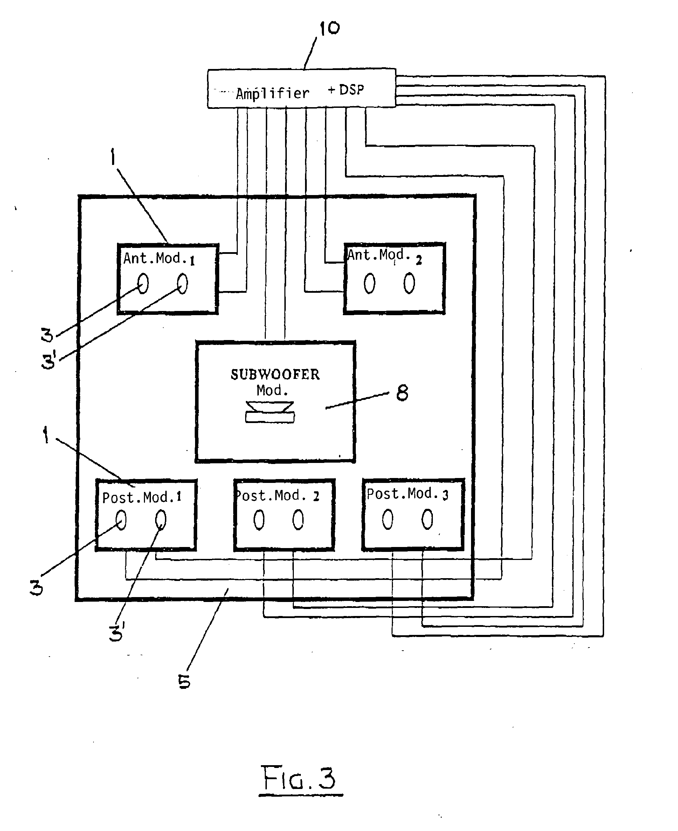

For a better modularity of the system, with strengthening of low sounds, a subwoofer 8 can be also prearranged, it can be installed into the roof upholstery 4 too, or under the roof 5 together with the loud-speakers 3, 3' as shown in the layouts of Figures 3 and 4 or it can be installed under one of the front seats in the space available in it.

For a further possible "wrapping" propagation of the acoustic signals emitted by the loud-speakers 3, 3' associated to the modular boxes 1, on the dashboard for the occupiers of the front seats and, if necessary, on the backrest of the same front seats for the occupiers of the rear seats, additional loud-speakers can be installed associated to a subwoofer 8 for the strengthening of the low sounds, to be installed into the previously mentioned position.

The loud-speakers 3, 3' installed into the modular boxes 1 can be associated to embedded or independent passive dampers.

Figure 3 represents the layout of a sound system according to the present invention with a dedicated amplifier and DSO 10 in Hi-Fi version, wherein the modular boxes 1 of all the seats that are present on vehicles can be independently switched on/off by the occupiers, according to their wishes; in this case, the driver or one or more passengers can listen to the same program without disturbing the other travellers, switching on the system only on their positions.

Figure 4 shows the layout of a sound system according to the invention, without dedicated amplifier and DSP and with centralized control.

When switched on, the car radio set simultaneously enables all the positions equipped with modular boxes 1 present on vehicles.

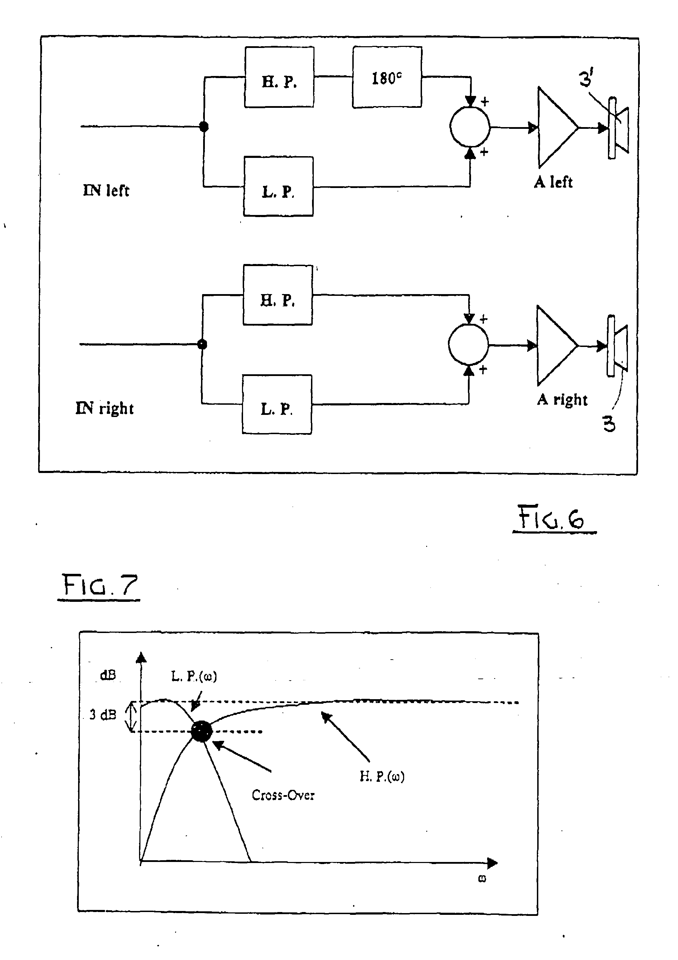

In a simplified and less expensive solution that allows obtaining the sound emissions only towards the ears of the passengers occupying the underlying seats in a more moderate way, the loud-speakers 3, 3' are connected in such a way to receive the signals that are directed by the car radio set 11 in a push-pull mode, with a global impedance of the modules that are placed in parallel between them consistently with the output impedance of the car radio set. In this solution, which is very close to the complete one with amplifier and DSP, in one of the channels, for example the left one (A left) with reference to Figure 6, the frequency range is split in two by a H.P. high pass filter and a H.L. low pass filter and the part pertaining to the high frequencies, i.e. the one to be extracted through the H.P. filtering, is inverted in phase (180°) and then mixed up with the part pertaining to the low frequencies, i.e. with the one which is extracted through the L.P. filtering. In this way, the sound space sense is increased and therefore the detection of the position of the sound source is avoided. In the specific case, the cross-over frequency is chosen with care, i.e. the frequency to which the level corresponds to - 3dB (Figure 7) compared to the band centre of the H.P. and L.P. reference functions that should be the same for both the transfer functions.

As can be seen in Figure 2, the modular boxes 1 with loud-speakers and connections that constitute the individual sound systems for vehicles of the present invention can be individually installed under the roof 5 of vehicles, according to the possible and various desired configurations.

As an alternative, the manufacturing of pre-moulded "shells" with a surface extension matching with the total or the partial one under the roof 5 of the vehicles over the seats 7 on which box impressions to house into the embedded form all the desired modular boxes 1 that are preassembled and complete with the relevant connections to the car radio sets is also contemplated. In this way, preassembled composed modules ready to be delivered to the car manufacturers and to be directly installed under the vehicle roofs 5 are obtained.

Even though the present invention has been described and illustrated according to some embodiments that are given only by way of non limitative example, various changes to shapes, components and to the ensembles can be made by a technician skilled in the art according to the above-mentioned description. It is therefore understood that the present invention is meant to cover all the changes and variants falling within the protective scope of the following claims

## Claims

1. An individual sound system for vehicles, **characterized in that** it comprises at least a preassembled modular box (1), containing two loud-speakers (3,3'), installed under the roof (5) of vehicles and vertically downwards oriented compared to a correspondent underlying seat (7) in substantial vertical alignment with the occupier's head position; said loud-speakers of at least said one modular box (1) having a "dipole stereo" configuration and being placed at an "average interaural" distance (D) between them, with the useful sound emissions oriented towards the ears of the occupiers seated on the underlying seats (7) like an individual "virtual headset".

2. The individual sound system for vehicles according to claim 1, **characterized in that** the loud-speakers (3,3') of each box (1) are of the broad band type, with digital processors of signals and comprising the tweeter and woofer associated functions; said loud-speakers (3,3') being engaged into each box (1) at a distance (D) between their parallel symmetry axes (YY), corresponding to their directivity with a value being very close to the "average interaural" distance.

3. The individual sound system for vehicles according to claim 1 or 2, **characterized in that** the loud-speakers (3,3') of each modular box (1), have narrow directivity lobes, from 10÷ to 15°.

4. The individual sound system for vehicles according to any of the previous claims, **characterized in that** the loud-speakers (3,3') of each modular box (1), placed between them at a distance (D) corresponding to their directivity, are placed at an average distance from the ears of the occupiers seated on the underlying seats (7) of 25-30 cm, which substantially corresponds to the "average interaural" distance.

5. The individual sound system for vehicles according to any of the previous claims, **characterized in that** the loud-speakers (3,3') of each modular box (1) installed under the roof (5) of vehicles, are downwards oriented and are symmetrically and orthogonally aligned compared to the vertical symmetry plan (6) of an underlying seat (7), in substantial alignment with the position of the occupiers' head; the useful sound signal "SU" emitted by the loud-speakers (3,3') being oriented only towards the ears of the passengers occupying each single seat (7), while the dispersed signals "SD" are not received.

6. The individual sound system for vehicles according to any of the previous claims, **characterized in that** the modular boxes (1) are associated to passive dampers embedded into them or independent.

7. The individual sound system for vehicles according to any of the previous claims, **characterized in that** the boxes (1) are modular and they are dedicated for each seated position (7) with an acoustic independence among the same positions.

8. The individual sound system for vehicles according to any of the previous claims, **characterized in that** the modular boxes (1) installed on vehicles in the desired number and layout, compared to the number of seats (7) can be associated to a subwoofer (8) placed under the roof (5) or in the space available under one of the front seats.

9. The individual sound system for vehicles according to any of the previous claims, **characterized in that** the modular boxes (1) are associated to loud-speakers placed on the dashboard, for the front seat (7) occupiers and on the backrests of the same front seats for the occupiers of the rear seats.

10. The individual sound system for vehicles according to any of the previous claims, **characterized in that** the modular boxes (1) with the loud-speakers (3, 3') and the relevant connections are embedded into box impressions formed on pre-moulded shells (12); said shells having a surface extension matching with the total or partial one of the part under the roof (5) of vehicles, with the aligned embeddings over the seats (7) of vehicles.

11. The individual sound system for vehicles according to any of the previous claims, **characterized in that** it comprises a dedicated amplifier and DSP (10) in Hi-Fi version, with the modular boxes (1) of all the positions present on vehicles.

12. The individual sound system for vehicles according to any of the previous claims, **characterized in that** the loud-speakers (3,3') of the modular boxes (1) are connected in such a way to receive the signals in the push-pull mode and are directed to a car radio set (11), with the global impedance of the modules that are placed in parallel between them being consistent with the output impedance of the car radio set.

13. The individual sound system for vehicles according to any of the previous claims, **characterized in that** the frequency range is split in two through an H.P. highpass filter and a L.P. low-pass filter and the part of the high frequencies being inverted in phase (180°) and mixed with the one pertaining to the low frequencies.
